# FASCICULE DE BREVET EUROPEEN

(11) **EP 0 709 162 B1**
(45) Date de publication et mention de la délivrance du brevet: **19.04.2000**
(21) Numéro de dépôt: 95402393.3
(22) Date de dépôt: 25.10.1995
(51) Int. Cl.: B23Q 1/70

(54) **Mécanisme d'entraînement d'une broche d'usinage**
Antriebseinrichtung einer Arbeitsspindel
Power unit for a work spindle

(30) Priorité: 27.10.1994 FR 9413088
(43) Date de publication de la demande: 01.05.1996
(73) Titulaire: Société à responsabilité limitée dite: GB TRONIC, 25130 Villers Le Lac (FR)
(72) Inventeur: Binetruy, Claude, F-25000 Besancon (FR)
(74) Mandataire: Schmit, Christian Norbert Marie

(56) Documents cités:
- EP-A- 0 563 862
- CH-A- 573 796
- CH-A- 679 289
- GB-A- 2 057 928

## Description

La présente invention concerne un mécanisme d'entraînement d'une broche d'usinage selon le préambule de la revendication 1 et comme connû du document GB-A-2.057.928.

Il est connu un certain nombre de mécanismes de ce type permettant d'obtenir le double mouvement recherché. Cependant, ces mécanismes mettent en oeuvre des systèmes distincts de mise en rotation et d'avance axiale de la broche.

Ceci entraîne non seulement une augmentation de l'encombrement du mécanisme mais également de son coût.

De plus, les mécanismes connus de ce type ne permettent pas, du fait de la conception distincte des systèmes de rotation et d'avance, d'obtenir la compacité de l'ensemble qui permettrait d'adapter l'énergie consommée au travail à effectuer. C'est ainsi que pour atteindre ce résultat, le concepteur est souvent conduit à recourir à des moteurs triphasés surdimentionnés, entraînant une consommation électrique élevée. Enfin, les mécanismes actuellement utilisés présentent une inertie globale assez importante qui s'oppose à toute augmentation sensible de la cadence d'usinage.

La demande de brevet britannique n° 2 057 928 tend à remédier à cet inconvénient en proposant un mécanisme d'entraînement d'une broche d'usinage sur laquelle est rapporté un outil qui est constitué :
- d'un ensemble fixe muni de moyens de commande d'avance axiale de la broche,
- d'un ensemble mobile muni de moyens d'entraînement en rotation de la broche, et apte à être actionné par lesdits moyens de commande d'avance axiale.

Néanmoins, un tel dispositif, selon l'agencement tel que décrit dans le brevet britannique précité, reste relativement encombrant. Cela est dû à un certain étalement des éléments constitutifs formant la chaîne cinématique, contraire à la compacité recherchée.

L'invention a pour but de concevoir un mécanisme simple permettant une grande compacité de ses éléments constitutifs par l'utilisation de moteurs de petite dimensions demandant moins d'énergie pour leur entraînement et pour l'agencement particulier desdits éléments.

A cet effet, l'invention concerne un mécanisme d'entraînement d'une broche d'usinage constitué :
- d'un ensemble fixe muni de moyens de commande d'avance axiale de la broche,
- d'un ensemble mobile muni de moyens d'entraînement en rotation de la broche, et apte à être actionné par lesdits moyens de commande d'avance axiale,
caractérisé en ce que les moyens de rotation de la broche sont constitués par un moteur de rotation disposé sur une platine de l'ensemble mobile, laquelle porte également la broche, ladite platine étant montée sur une vis sans fin de l'ensemble fixe par l'intermédiaire d'un écrou.

Un tel mécanisme selon l'invention permet non seulement d'atteindre les résultats visés et cités ci-dessus, mais il permet en outre, en raison de la compacité rendue ainsi possible, d'obtenir une meilleure rigidité, d'où une meilleurs précision de l'ensemble d'usinage et une augmentation de la cadence d'avance axiale de l'outil, celle-ci pouvant être doublée par rapport à celles obtenues par les mécanismes actuels. Comme on le verra plus loin, ceci est rendu possible grâce à la faible inertie des éléments constitutifs du mécanisme d'entraînement conforme à l'invention.

La description qui va suivre, donnée à titre d'exemple non limitatif, fera bien comprendre en quoi consiste l'invention et comment elle peut être réalisée:

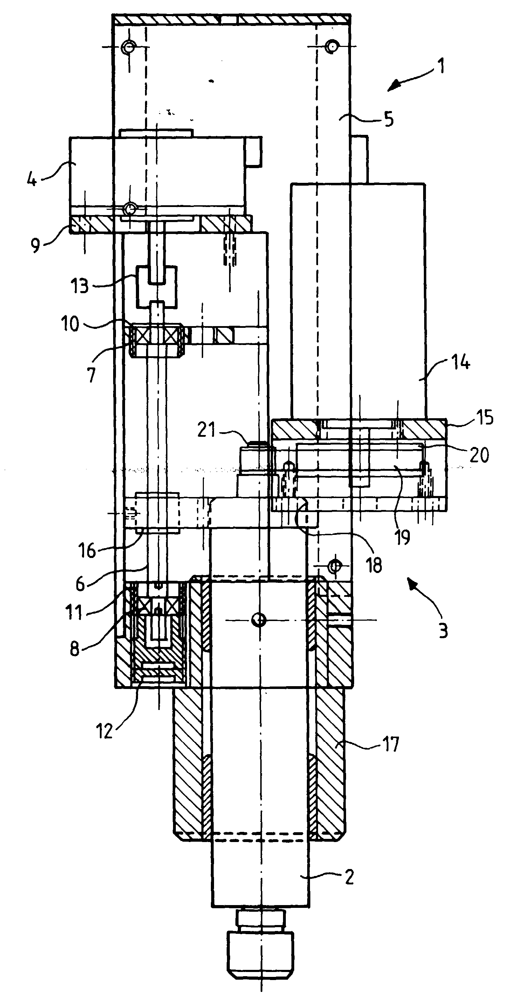

La figure unique représente une vue en plan d'un mécanisme complet d'entraînement d'une broche d'usinage selon l'invention.

Le mécanisme représenté sur la figure comporte globalement un ensemble fixe 1 muni de moyens de commande d'avance axiale d'une broche 2 qui lui sont solidaires et par rapport auquel ensemble fixe 1 est actionné un ensemble mobile 3 associé, muni de moyens d'entraînement en rotation de ladite broche 2 qui lui sont solidaires et qui sont aptes à être actionnés simultanément avec lesdits moyens de commande d'avance axiale.

Comme le montre la figure, les moyens de commande d'avance axiale sont constitués par un moteur 4 d'avance disposé sur un bâti 5 dudit ensemble fixe 1, et susceptible d'agir en rotation dans un sens ou dans l'autre sur une vis 6 sans fin apte à tourillonner entre deux supports 7, 8 dudit bâti 5, parallèles entre eux.

Le moteur 4 de translation est fixé sur le bâti 5 de l'ensemble fixe 1 par l'intermédiaire d'une platine 9.

Préférentiellement, et afin d'obtenir une plus grande précision de guidage, les supports 7, 8 entre lesquels tourillionne la vis 6 sans fin, sont constitués par des roulements à contact oblique.

Les roulements supérieur 7 et inférieur 8 comportent des écrous de blocage respectivement 10 et 11.

Par ailleurs, le support inférieur de la vis 6 sans fin comporte, outre le roulement à contact oblique 8, un écrou de réglage 12 de compensation de jeu.

La vis 6 sans fin est une vis à billes de précision et sa liaison mécanique avec le moteur 4 de translation est assurée par un accouplement élastique 13 de manière à réaliser une transmission douce et susceptible de compenser les écarts d'alignement.

On remarquera également que la liaison directe entre le moteur 4 de translation et la vis 6 à billes assure un accouplement rigide en rotation, éliminant tout risque de jeu et toute inertie supplémentaires.

Les moyens d'entraînement en rotation de la broche 2 sont constitués par un moteur 14 de rotation disposé sur une platine 15 de l'ensemble mobile 3, laquelle porte également la broche, ladite platine 15 étant montée sur la vis 6 sans fin de l'ensemble fixe 1 par l'intermédiaire d'un écrou 16 de vis à billes, et susceptible de coulisser dans un fourreau 17 du bâti 5 par rapport auquel elle est immobilisée en rotation, de manière à provoquer une avance axiale de ladite platine 15 dans une direction ou dans une autre lors de la rotation de la vis 6 sans fin dans un sens ou dans l'autre.

Comme on peut le voir sur la figure, la platine 15 porte le moteur 14 de rotation et la broche 2 dont une extrémité opposée à celle portant l'outil d'usinage (non représenté) est emmanchée fixement dans un alésage 18 de ladite platine 15.

Ce dernier a un contour correspondant à celui du fourreau 17 du bâti fixe 3 pour y coulisser, interdisant, comme déjà évoqué, sa rotation, afin de contraindre la platine 15, et par conséquent la broche 2 qu'elle porte, à un mouvement vertical de haut en bas ou inversement lorsque la vis 6 sans fin tourne dans l'écrou 16 de vis à billes, rendant ainsi ladite platine 15 obligatoirement mobile en translation d'avance axiale.

Préférentiellement, la liaison entre le moteur 14 de rotation et la broche 2est assurée par l'intermédiaire d'une courroie dentée 19. Bien entendu, il pourrait également s'agir d'un jeu de pignons dont les rapports permettraient des rapports correspondants de vitesses, modulables à la demande. En l'occurrence, la transmission de la courroie 19 s'effectue au moyen d'une poulie 20 agissant sur l'arbre 21 de la broche 2, par l'intermédiaire de la courroie 19.

Le moteur 4 d'avance axiale peut être un moteur à micropas à aimants-disques permettant une grande accélération du fait de sa faible inertie.

A titre d'exemple, pour un diamètre de la vis 6 à billes de 1,25 mm et pour une vitesse de rotation du moteur 4 d'avance de 2500 pas par tour, on obtient un micropas de 0,5 µm, ce qui est compatible avec une tolérance exigée de 1 µm.

Egalement à titre d'exemple, le moteur 14 de rotation pourra être, soit un moteur du type ci-dessus avec capteurs à effet Hall intégrés, pour des puissances de l'ordre de 25W, soit un moteur sans balais autorisant des puissances de l'ordre de 100W.

Ces moteurs, qui permettent d'atteidre des vitesses de l'ordre de 15000 tours par minute, seront choisis en fonction de la taille de l'outil, celui-ci pouvant être une fraise ou un forêt par exemple, et du type d'usinage à effectuer, sachant que plus l'outil est petit, plus il doit tourner vite pour une même vitesse de couple. Par le jeu du rapport des poulies qui peut atteindre 4, on peut obtenir une vitesse de broche de 60000 tours par minute.

## Revendications

1. Mécanisme d'entraînement d'une broche d'usinage constitué :
- d'un ensemble fixe (1) muni de moyens de commande d'avance axiale de la broche (2),
- d'un ensemble mobile (3) muni de moyens d'entraînement en rotation de la broche (2), et apte à être actionné par lesdits moyens de commande d'avance axiale,
caractérisé en ce que les moyens de rotation de la broche (2) sont constitués par un moteur de rotation (14) disposé sur une platine (15) de l'ensemble mobile (3), laquelle porte également la broche (2), ladite platine (15) étant montée sur une vis (6) sans fin de l'ensemble fixe (1) par l'intermédiaire d'un écrou (16).

2. Mécanisme selon la revendication 1, caractérisé en ce que la platine (15) est susceptible de coulisser dans un fourreau (17) du bâti (5) par rapport auquel elle est immobilisée en rotation, de manière à provoquer son avance axiale dans une direction ou dans une autre lors de la rotation de la vis (6) sans fin dans un sens ou dans l'autre.

3. Mécanisme selon la revendication 1 ou 2, caractérisé en ce que les moyens de commande d'avance axiale sont constitués par un moteur (4), disposé sur un bâti (5) de l'ensemble fixe (1) et susceptible d'agir en rotation dans un sens ou dans l'autre sur la vis sans fin (6) tourillonnant entre deux supports (7,8) dudit bâti.

4. Mécanisme selon la revendication 3, caractérisé en ce que le moteur d'avance axiale est fixé sur le bâti (5) de l'ensemble fixe (1) par l'intermédiaire d'une platine (9).

5. Mécanisme selon la revendication 4, caractérisé en ce que la liaison entre le moteur (14) de rotation et la broche (2) est assurée par une courroie dentée (19).

6. Mécanisme selon l'une quelconque des revendications 3 à 5, caractérisé en ce que les supports (7,8) entre lesquels tourillonne la vis (6) sans fin sont constitués par des roulements à contact oblique.

7. Mécanisme selon la revendication 6, caractérisé en ce que le support inférieur de la vis (6) sans fin comporte, outre le roulement à contact oblique (8), un écrou (12) de réglage de compensation de jeu.

8. Mécanisme selon l'une quelconque des revendications 1 à 7, caractérisé en ce que la vis (6) sans fin est une vis à billes de précision.

9. Mécanisme selon l'une quelconque des revendications 1 à 8, caractérisé en ce que la liaison entre le moteur (4) de translation et la vis (6) sans fin est assurée par un accouplement élastique (13).

## Patentansprüche

1. Antriebsmechanismus einer Arbeitsspindel, gebildet aus:
- einer festen Baugruppe (1), die mit Mitteln zum Steuern des axialen Vorschubs der Spindel (2) ausgetattet ist, und
- einer beweglichen Baugruppe (3), die mit Mitteln zum Drehantrieb der Spindel (2) ausgestattet ist und dazu eingerichtet ist, durch die genannten Mittel zum Steuern des axialen Vorschubs betätigt zu werden.
dadurch gekennzeichnet, daß die Mittel zur Drehung der Spindel (2) von einem Drehmotor (14) gebildet sind, der auf einer Platte (15) der beweglichen Baugruppe (3) angeordnet ist, die auch die Spindel (2) trägt, und daß die genannte Platte (15) an einer Schneckenspindel (6) der festen Baugruppe (1) mittels einer Mutter (16) angebracht ist.

2. Mechanismus nach Anspruch 1, dadurch gekennzeichnet, daß die Platte (15) imstande ist, in einer Hülse (17) des Maschinengestells (5) zu gleiten, bezüglich deren sie drehfest festgelegt ist, um auf diese Weise ihren axialen Vorschub in der einen oder anderen Richtung während der Drehung der Schneckenspindel (6) in der einen oder anderen Richtung hervorzurufen.

3. Mechanismus nach Anspruch 1 oder 2, dadurch gekennzeichnet. daß die Mittel zum Steuern des axialen Vorschubs von einem Motor (4) gebildet sind, der auf einem Maschinengestell (5) der festen Baugruppe (1) angeordnet ist und imstande ist, bei der Drehung in der einen oder anderen Richtung auf die Schneckenspindel (6) einzuwirken, die sich zwischen zwei Lagern (7, 8) des genannten Maschinengestells dreht.

4. Mechanismus nach Anspruch 3, dadurch gekennzeichnet, daß der Motor für den axialen Vorschub am Maschinengestell (5) der festen Baugruppe (1) mittels einer Platte (9) befestigt ist.

5. Mechanismus nach Anspruch 4, dadurch gekennzeichnet, daß die Verbindung zwischen dem Motor (14) zur Drehung und der Spindel (2) durch einen Zahnriemen (19) sichergestellt ist.

6. Mechanismus nach irgendeinem der Ansprüche 3 bis 5, dadurch gekennzeichnet, daß die Lager (7, 8), zwischen denen sich die Schneckenspindel (6) dreht, durch Lagerungen mit schräger Berührung bzw. Schrägrollenlager gebildet sind.

7. Mechanismus nach Anspruch 6, dadurch gekennzeichnet, daß das untere Lager der Schneckenspindel (6) außer der Lagerung mit schräger Berührung (8) eine Einstellmutter (12) zum Einstellen des Toleranzausgleichs aufweist.

8. Mechanismus nach irgendeinem der Ansprüche 1 bis 7, dadurch gekennzeichnet, daß die Schneckenspindel (6) eine Präzisions-Kugelgewindespindel ist.

9. Mechanismus nach irgendeinem der Ansprüche 1 bis 8, dadurch gekennzeichnet, daß die Verbindung zwischen dem Motor (4) für die Translationsbewegung und der Schneckenspindel (6) durch eine elastische Koppellung (13) sichergestellt ist.

## Claims

1. A driving mechanism for a machining pin comprising:
- a stationary unit (1) provided with means for controlling the forward axial movement of the pin (2),
- a mobile unit (3) provided with means for driving the pin in rotation (2) and designed to be activated by said means for controlling forward axial movement,
characterised in that the means for rotating the pin (2) consist of a rotating motor (14) arranged on a plate (15) of the mobile unit (3), which also bears the pin (2), said plate (15) being mounted on an endless screw (6) of the stationary unit (1) by means of a nut (16).

2. A mechanism as claimed in claim 1, characterised in that the plate (15) is designed to slide in a barrel (17) of the frame (5), relative to which it is immobilised in rotation, so as to cause an axial forward movement in one direction or in another when the endless screw (6) is rotated in one direction or the other.

3. A mechanism as claimed in claim 1 or 2, characterised in that the means controlling forward axial movement comprise a motor (4) arranged on a frame (5) of the stationary unit (1), designed to act, as it rotates in one direction or the other, on the endless screw (6) trunnion mounted between two supports (7, 8) of said frame.

4. A mechanism as claimed in claim 3, characterised in that the forward axial motor is fixed onto the frame (5) of the stationary unit (1) by means of a plate (9).

5. A mechanism as claimed in claim 4, characterised in that the link between the rotary motor (14) and the pin (2) is provided in the form of a toothed belt (19).

6. A mechanism as claimed in any one of claims 3 to 5, characterised in that the supports (7, 8) between which the endless screw (6) is mounted consist of angular ball bearings.

7. A mechanism as claimed in claim 6, characterised in that the bottom support of the endless screw (6) has, in addition to the angular ball bearing (8), an adjustment nut (12) to compensate clearance.

8. A mechanism as claimed in any one of claims 1 to 7, characterised in that the endless screw (6) is a precision ball screw.

9. A mechanism as claimed in any one of claims 1 to 8, characterised in that the link between the translation motor (4) and the endless screw (6) is an elastic coupling (13).
